(19) Europäisches Patentamt
European Patent Office
Office européen des brevets

(11) **EP 4 729 994 A1**

## (12) EUROPEAN PATENT APPLICATION

(43) Date of publication:
**22.04.2026 Bulletin 2026/17**

(21) Application number: **25201343.8**

(22) Date of filing: **10.09.2025**

(51) International Patent Classification (IPC):
**G02B 5/18** (2006.01)       **F21V 8/00** (2006.01)
**G02B 6/34** (2006.01)       **G02B 27/00** (2006.01)
**G02B 27/01** (2006.01)       **G02B 27/42** (2006.01)

(52) Cooperative Patent Classification (CPC):
**G02B 27/4272; G02B 5/1809; G02B 5/1814;
G02B 5/1819; G02B 5/1866; G02B 27/0081;
G02B 27/0172;** G02B 2005/1804; G02B 2027/0174;
G02B 2027/0178

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.10.2024 CN 202411434870**

(71) Applicant: **Goertek Optical Technology Co., Ltd.
Weifang, Shandong 261031 (CN)**

(72) Inventor: **CHENG, Xin
Shandong 261031 (CN)**

(74) Representative: **Rau, Schneck & Hübner
Patentanwälte Rechtsanwälte PartGmbB
Königstraße 2
90402 Nürnberg (DE)**

(54) **DIFFRACTIVE OPTICAL STRUCTURE AND NEAR-EYE DISPLAY DEVICE**

(57) The present disclosure provides a diffractive optical structure and a near-eye display device. The diffractive optical structure includes a substrate (3) and an in-coupling region (1) and an out-coupling region (2) provided on the substrate (3). The out-coupling region (2) includes a grating structure that includes a plurality of periodically arranged grating ridges (201) and grating grooves (202) between adjacent grating ridges (201), and the grating grooves contain at least two materials having different refractive indices. An average refractive index $\bar{n}$ of the different materials within one grating unit period of the grating structure satisfies $1.1 < \bar{n} \leq 2.4$, where

$$\bar{n} = \frac{\sum_{i=1}^{m} n_m * V_m}{V_{unitcell}}$$ , $V_1$, ..., $V_m$ are respectively the volumes or areas of the first to the m-th material, $n_1, ..., n_m$ are the refractive indices of the first to the m-th material, and $V_{unitcell}$ is the volume or area of one grating unit period.

**FIG. 2**

**Description**

**TECHNICAL FIELD**

The present disclosure relates to the field of augmented reality (AR) technology, and specifically to a diffractive optical structure and a near-eye display device.

**BACKGROUND**

With the rapid development of augmented-reality (AR) technology, AR optical solutions based on diffractive optical waveguides have gradually become a key route to achieving highly efficient, lightweight display systems. In this technical field, the overall optical efficiency of the waveguide is one of the most important metrics for evaluating its performance. In the prior art, the ability to modulate diffraction efficiency in non-in-coupling regions has become a key factor restricting further improvement of waveguide efficiency.

Therefore, how to effectively enhance the ability to modulate diffraction efficiency in non-in-coupling regions and achieve flexible shifting control of the grating diffraction-efficiency curve has become an urgent problem to be solved in current AR optical solutions.

**SUMMARY**

An object of the present disclosure is to provide a new technical solution for a diffractive optical structure and a near-eye display device.

According to a first aspect of the present disclosure, an embodiment of the present disclosure provides a diffractive optical structure, comprising a substrate and an in-coupling region and an out-coupling region provided on the substrate;

wherein the out-coupling region includes a grating structure that comprises a plurality of periodically arranged grating ridges and grating grooves between adjacent grating ridges, and the grating grooves contain at least two materials having different refractive indices;

an average refractive index $\bar{n}$ of the different materials within one grating unit period of the grating structure satisfies $1.1 < \bar{n} \leq 2.4$, where $\bar{n} = \dfrac{\sum_{i=1}^{m} n_m * V_m}{V_{unitcell}}$, $V_1, \ldots, V_m$ are respectively the volumes or areas of the first to the m-th material, $n_1, \ldots, n_m$ are the refractive indices of the first to the m-th material, and $V_{unitcell}$ is the volume or area of one grating unit period.

Optionally, the average refractive index $\bar{n}$ of the different materials within one grating unit period of the grating structure satisfies $1.35 \leq \bar{n} \leq 2.15$.

Optionally, the substrate has two opposite surfaces, and the in-coupling region and the out-coupling region are disposed on at least one of the surfaces of the substrate;

the in-coupling region is configured to couple external light into the interior of the substrate; and

the out-coupling region is configured to expand the pupil and couple the light out.

Optionally, the grating structure comprises a plurality of grating ridges arranged along a first direction with a first period $P_1$, grating grooves being located between adjacent grating ridges, and at least part of the grating grooves is an air groove;

the average refractive index $\bar{n}$ of the different materials within one grating unit period of the grating structure is calculated as $\bar{n} = \dfrac{\sum_{i=1}^{m} n_m * V_m}{V_{unitcell}}$;

where $\sum_{i=1}^{m} n_m * V_m = n_{1*}V_1 + n_2 * V_2 + n_3 * V_3 + \cdots\cdots + n_m * V_m$, $V_1$ is the longitudinal cross-sectional area of the grating ridge, $n_1$ is the refractive index of the grating ridge, $V_2$ is the longitudinal cross-sectional area of the air groove, $n_2$ is the refractive index of air, $V_3$ is the longitudinal cross-sectional area of a first filling material inside the grating groove, $n_3$ is the refractive index of the first filling material inside the grating groove, $V_m$ is the longitudinal cross-sectional area of an m-th filling material inside the grating groove, $n_m$ is the refractive index of the m-th filling material inside the grating groove, and $V_{unitcell} = P_1 * H$, H being the height of the grating ridge.

Optionally, the grating structure comprises a plurality of grating ridges arranged with a second period $P_2$ along a second direction and with a third period $P_3$ along a third direction, grating grooves being located between adjacent grating ridges, and at least part of the grating grooves is an air groove;

the average refractive index $\bar{n}$ of the different materials within one grating unit period of the grating structure is calculated as $\bar{n} = \dfrac{\sum_{i=1}^{m} n_m * V_m}{V_{unitcell}}$;

where $\sum_{i=1}^{m} n_m * V_m = n_{1*}V_1 + n_2 * V_2 + n_3 * V_3 + \cdots\cdots + n_m * V_m$ , $V_1$ is the volume of the grating ridge, $n_1$ is the refractive index of the grating ridge, $V_2$ is the volume of the air groove, $n_2$ is the refractive index of air, $V_3$ is the volume of a first filling material inside the grating groove, $n_3$ is the refractive index of the first filling material inside the grating groove, $V_m$ is the volume of an m-th filling material inside the grating groove, $n_m$ is the refractive index of the m-th filling material inside the grating groove, and $V_{unitcell} = (P_2 * P_3) * H$, H being the height of the grating ridge.

Optionally, at least one layer of filling material is disposed to cover the grating structure, and the refractive index of the at least one layer of filling material is different from the refractive index of the grating ridge.

Optionally, the at least one layer of filling material includes a first filling material covering surfaces of the grating ridge and sidewalls and a bottom of the grating groove, the grating groove including the air groove and the first filling material.

Optionally, the at least one layer of filling material further includes a second filling material covering the first filling material, the grating groove further including the second filling material while retaining the air groove, and the refractive index of the first filling material is different from the refractive index of the second filling material.

Optionally, the at least one layer of filling material further includes a third filling material covering a surface of the second filling material facing away from the first filling material, the grating groove further including the third filling material and the third filling material filling the air groove;

the refractive indices of the first filling material, the second filling material, and the third filling material are all different from one another.

According to a second aspect of the present disclosure, an embodiment of the present disclosure provides near-eye display device, including:

an image source; and
the diffractive optical structure according to the first aspect, light emitted from the image source being incident on the in-coupling region of the diffractive optical structure.

An advantageous effect of the embodiments of the present disclosure lies in:

The diffractive optical structure provided by the embodiments of the present disclosure achieves precise shifting control of the diffraction-efficiency curve of the grating structure in the out-coupling region (i.e., the non-in-coupling region) by regulating the range of the average refractive index $\bar{n}$ of the different materials within one grating unit period of the grating structure, thereby significantly improving the overall out-coupling efficiency of the diffractive optical structure. Specifically, as light propagates within the substrate by total internal reflection and gradually moves toward the rear end, the angle of reflection naturally decreases. Through careful design, the present disclosure appropriately reduces the average refractive index $\bar{n}$ of the different materials within one grating unit period of the grating structure in the out-coupling region, ensuring that the peak of the out-coupling-efficiency curve can flexibly shift toward smaller angles and precisely match the out-coupling requirements of light at small angles.

The technical solution provided by the embodiments of the present disclosure not only overcomes the difficulty of precisely controlling the shape and peak position of the out-coupling-efficiency curve at different locations in conventional methods, but also realizes accurate positioning of the peak of the out-coupling-efficiency curve at the minimum reflection angle of light, thereby greatly optimizing the propagation path and out-coupling efficiency of light within the diffractive optical structure.

Other features and advantages of the present disclosure will become apparent from the following detailed description of exemplary embodiments with reference to the accompanying drawings.

## BRIEF DESCRIPTION OF THE DRAWINGS

The accompanying drawings, which are incorporated in the description and constitute a part of the description, illustrate embodiments of the present disclosure and, together with the description thereof, serve to explain the principles of the present disclosure.

FIG. 1 is a structural schematic diagram of a diffractive optical structure provided by an embodiment of the present disclosure.

FIG. 2 is a first schematic diagram of the grating structure in the out-coupling region provided by an embodiment of the present disclosure.

FIG. 3 is a first out-coupling-efficiency curve of the diffractive optical structure provided by an embodiment of the present disclosure.

FIG. 4 is a second out-coupling-efficiency curve of the diffractive optical structure provided by an embodiment of the present disclosure.

FIG. 5 is a third out-coupling-efficiency curve of the diffractive optical structure provided by an embodiment of the present disclosure.

FIG. 6 is a second schematic diagram of the grating structure in the out-coupling region provided by an embodiment of the present disclosure.

FIG. 7 is a fourth out-coupling-efficiency curve of the diffractive optical structure provided by an embodiment of the present disclosure.

FIG. 8 is a third schematic diagram of the grating structure in the out-coupling region provided by an embodiment of the present disclosure.

FIG. 9 is a fourth schematic diagram of the grating structure in the out-coupling region provided by an embodiment of the present disclosure.

FIG. 10 is a fifth schematic diagram of the grating structure in the out-coupling region provided by an embodiment of the present disclosure.

FIG. 11 is a sixth schematic diagram of the grating structure in the out-coupling region provided by an embodiment of the present disclosure.

FIG. 12 is a seventh schematic diagram of the grating structure in the out-coupling region provided by an embodiment of the present disclosure.

FIG. 13 is an eighth schematic diagram of the grating structure in the out-coupling region provided by an embodiment of the present disclosure.

DESCRIPTION OF REFERENCE SIGNS

1: in-coupling region; 2: out-coupling region; 3: substrate;
201: grating ridge; 202: grating groove; 203: air groove; 204: first filling material; 205: second filling material; 206: third filling material.

## DETAILED DESCRIPTION

Various exemplary embodiments of the present disclosure will now be described in detail with reference to the accompanying drawings. It should be noted that, unless otherwise specifically stated, the relative arrangement of components and steps, numerical expressions, and numerical values set forth in these embodiments do not limit the scope of the present disclosure.

The description of at least one exemplary embodiment below is merely illustrative and is in no way intended to limit the present disclosure or its application or use.

Techniques, methods, and apparatus known to those of ordinary skill in the relevant art may not be discussed in detail, but where appropriate, such techniques, methods, and apparatus should be regarded as part of the present specification.

In all the examples shown and discussed herein, any specific value should be interpreted as illustrative only and not as limiting. Accordingly, other examples of the exemplary embodiments may have different values.

It should be noted that like reference numerals and letters in the drawings below denote like items; therefore, once an item is defined in one drawing, it need not be further discussed in subsequent drawings.

The diffractive optical structure and the near-eye display device provided by the embodiments of the present disclosure will now be described in detail below in conjunction with the accompanying drawings.

In a diffractive optical structure, a diffractive optical waveguide is a common form; hereinafter, the diffractive optical waveguide is abbreviated as "optical waveguide."

The overall optical efficiency of an optical waveguide is mainly determined by two parts: in-coupling efficiency and pupil-expansion out-coupling efficiency. In-coupling efficiency focuses on how to efficiently couple external light into the interior of the optical waveguide, whereas pupil-expansion out-coupling efficiency is more complex-it demands precise out-coupling control for light rays of different angles at different locations. Unlike in-coupling efficiency, which is pursued to be as high as possible, pupil-expansion out-coupling efficiency must be tailored to actual needs so that light rays of different angles can be effectively coupled out at different positions. For example, at the front end of the out-coupling region, light travels a short path and light undergoing total internal reflection at large angles dominates; accordingly, the peak of the out-coupling-efficiency curve is usually located at a large angle. As light continues toward the rear end of the optical waveguide, its path lengthens and the angle of total internal reflection gradually decreases, requiring the peak of the out-coupling-efficiency curve to shift correspondingly so as to meet the out-coupling needs of small-angle light. However, existing methods for controlling pupil-expansion out-coupling face many challenges in realizing such modulation and are unable to precisely control the shape and peak position of the out-coupling-efficiency curve at different locations. To address this, the present disclosure proposes a new diffractive optical structure, which will be described in detail below.

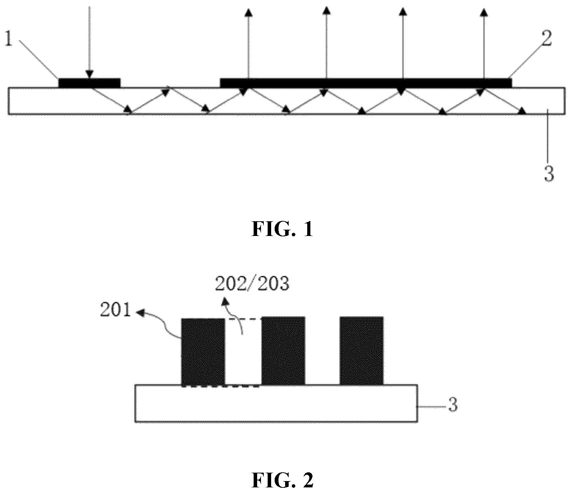

According to an embodiment of the present disclosure, a diffractive optical structure is provided. Referring to FIG. 1, the diffractive optical structure comprises a substrate and an in-coupling region 1 and an out-coupling region 2 provided on the substrate 3. The out-coupling region 2 includes a grating structure comprising a plurality of periodically arranged grating ridges 201 and grating grooves 202 located between adjacent grating ridges 201, the grating grooves 202 containing at least two materials having different refractive indices. An average refractive index $\bar{n}$ of the different materials within one grating unit period of the grating structure satisfies $1.1 < \bar{n} \leq 2.4$, where $\bar{n} = \dfrac{\sum_{i=1}^{m} n_m * V_m}{V_{unitcell}}$, $V_1, \ldots, V_m$ are respectively the volumes or areas of the first to the m-th material, $n_1, ..., n_m$ are the refractive indices of the first to the m-th material, and $V_{unitcell}$ is the volume or area of one grating unit period.

The diffractive optical structure provided by the embodiments of the present disclosure is illustrated in FIG. 1, and is composed of a substrate 3 together with an in-coupling region 1 and an out-coupling region 2 disposed thereon. In the present design, efficient light out-coupling is realized by regulating the average refractive index $\bar{n}$ of the different materials within one grating unit period of the grating structure disposed in the out-coupling region 2. For example, the average refractive index $\bar{n}$ satisfies $1.1 < \bar{n} \leq 2.4$.

The diffractive optical structure provided by the embodiments of the present application comprises the following parts, which will be described in detail below.

Substrate 3: it serves as the basic support layer of the entire diffractive optical structure and provides a stable platform for the in-coupling region 1 and the out-coupling region 2; the substrate 3 is required to have good optical transparency and mechanical stability to ensure effective transmission of light and the stability of the overall structure.

In-coupling region 1: the main function of this region is to effectively couple external light into the substrate 3, and it is equivalent to the entrance for light entering the diffractive optical structure.

Out-coupling region 2: this region contains a specially designed grating structure for expanding the pupil (i.e., enlarging the beam diameter) inside the diffractive optical structure and coupling the light out to external space, and in the present application it is the key part for achieving efficient light utilization.

In the diffractive optical structure provided by the embodiments of the present application, referring to FIG. 1 and FIG. 2, the out-coupling region 2 contains a specially designed grating structure, which is composed of a plurality of periodically arranged grating ridges 201 and grating grooves 202 located between adjacent grating ridges 201; wherein, by designing the average refractive index $\bar{n}$ of the different materials within one grating unit period of the grating structure (for example, designing it as $1.1 < \bar{n} \leq 2.4$), the diffraction efficiency curve of the grating structure can be influenced, thereby achieving efficient light out-coupling.

The grating grooves 202 can be filled with at least two materials, for example, air and at least one low-refractive-index material. When the grating grooves 202 are entirely filled with air, the average refractive index $\bar{n}$ of the different materials within one grating unit period of the grating structure is 1.1.

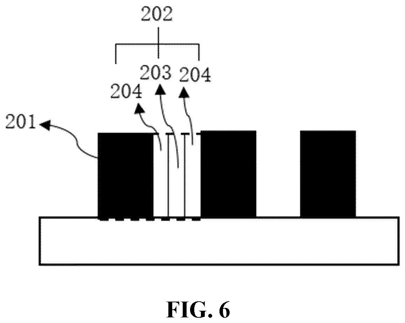

In order to achieve regulation of the average refractive index $\bar{n}$ of the grating structure, the present application proposes a variety of methods, referring to FIG. 2 and FIG. 6, including introducing air and/or other low-refractive-index materials into the grating grooves 202.

For example, processes such as spin-coating filling glue, ink-jet filling glue, ALD deposition, PVD deposition, or CVD deposition can be used individually or in combination. By employing these methods alone or in combination, the average refractive index $\bar{n}$ of the grating structure at different positions can be adjusted to match the out-coupling requirements of light at different angles, thereby improving the out-coupling efficiency and light uniformity of the entire diffractive optical structure.

According to the diffractive optical structure provided by the embodiments of the present application, its core lies in the special design of the grating structure in the out-coupling region 2, wherein the average refractive index $\bar{n}$ of the different materials within one grating unit period of the grating structure is set within the range of $1.1 < \bar{n} \leq 2.4$ mentioned in the above embodiments. This design utilizes the capability of adjusting physical parameters of the grating structure to realize fine control over the average refractive index $\bar{n}$ of the different materials within one grating unit period of the grating structure.

Specifically, by adjusting the dimensions (such as area or volume) and refractive indices of the grating ridges 201 and the grating grooves 202, and by introducing air or other low-refractive-index materials, the average refractive index $\overline{n}$ of the different materials within one grating unit period of the grating structure can be flexibly changed. This design not only broadens the adjustment range but also allows the shape and position of the grating diffraction-efficiency curve to be flexibly adjusted according to requirements, thereby optimizing light out-coupling efficiency and uniformity.

The diffractive optical structure designed in this way not only increases the utilization efficiency of light but also enhances the overall performance of the diffractive optical structure, thus providing a clearer and more uniform visual experience for near-eye display devices.

The diffractive optical structure provided by the embodiments of the present application, through the new design of the grating structure on its out-coupling region 2, can achieve at least the following technical effects:

First, by optimizing the average refractive index $\overline{n}$ of the different materials within one grating unit period of the grating structure in the out-coupling region 2 to $1.1 < \overline{n} \le 2.4$, the diffractive optical structure provided by the embodiments of the present application can significantly improve light out-coupling efficiency. This is because, as light is coupled into the substrate 3 from the in-coupling region 1 and transmitted toward the out-coupling region 2 (i.e., the rear end), the reflection angle of the light naturally decreases. By appropriately reducing the value of $\overline{n}$, the peak of the out-coupling-efficiency curve can be shifted toward smaller angles, thereby meeting the high-efficiency out-coupling requirements of light at different positions and different angles.

Second, by reasonably regulating the average refractive index $\overline{n}$ of the different materials within one grating unit period of the grating structure throughout the entire out-coupling region 2, the diffractive optical structure of the present application is able to improve the uniformity of the light distribution, thereby reducing light loss or distortion caused by non-uniformity of the grating structure.

It can thus be seen that, through the new optical parameter design of the grating structure within the out-coupling region 2, the diffractive optical structure provided by the embodiments of the present application not only enhances out-coupling efficiency but also improves light uniformity, thereby significantly boosting the overall optical performance of the entire diffractive optical structure.

The diffractive optical structure provided by the embodiments of the present application achieves precise shifting control of the diffraction-efficiency curve of the grating structure by regulating the average refractive index $\overline{n}$ of the different materials within one grating unit period of the grating structure located in the out-coupling region (i.e., the non-in-coupling region). This design increases the overall out-coupling efficiency of the optical structure. Specifically, as the light undergoes total internal reflection inside the substrate and progressively propagates toward the rear end, the reflection angle of the light naturally decreases. Through meticulous design, the average refractive index $\overline{n}$ of the different materials within one grating unit period of the grating structure in the out-coupling region is appropriately reduced in a timely manner, ensuring that the peak of the out-coupling-efficiency curve can flexibly shift toward smaller angles and accurately match the out-coupling requirements of small-angle light.

The technical solution provided by the embodiments of the present application not only overcomes the difficulty of precisely regulating the shape and peak position of the out-coupling-efficiency curve at different locations in conventional methods, but also realizes accurate positioning of the peak of the out-coupling-efficiency curve exactly at the minimum reflection angle of the light, thereby greatly optimizing the transmission path and out-coupling efficiency of the light within the diffractive optical structure.

In some examples of the present application, the average refractive index $\overline{n}$ of the different materials within one grating unit period of the grating structure is $1.35 < \overline{n} \le 2.15$.

In this example of the present application, within the out-coupling region 2, the average refractive index $\overline{n}$ of the different materials within one grating unit period of the grating structure is limited to $1.35 \le \overline{n} \le 2.15$. This range is designed, on the one hand, on the basis of adjusting the grating ridges 201 when a low-refractive-index material is employed, and, on the other hand, on the basis of optimizing the optical performance of the grating structure.

Specifically, setting the average refractive index $\overline{n}$ of the different materials within one grating unit period of the grating structure in the range of 1.35 to 2.15 (inclusive of both endpoints) means that, during the design of the grating structure, the average refractive index $\overline{n}$ can be regulated more finely. An average refractive index $\overline{n}$ within this range can more effectively match the transmission characteristics and out-coupling requirements of light, thereby ensuring that light can be efficiently coupled out at different positions and angles.

Within this range proposed in this example, by adjusting the physical parameters of the grating structure-such as the dimensions of the grating ridges 201 and the grating grooves 202 and the refractive indices of the filling materials-the shape and peak position of the grating diffraction-efficiency curve can be controlled more precisely. In particular, as light is transmitted from the in-coupling region 1 toward the rear end, the peak of the out-coupling-efficiency curve can be ensured to reach an optimal position at different angles, thereby significantly improving out-coupling efficiency.

This range proposed in this example not only helps enhance out-coupling efficiency but also improves the uniformity distribution of light and reduces light loss. Because the average refractive index $\overline{n}$ of the different materials within one grating unit period of the grating structure in the out-coupling region 2 is more finely regulated, the transmission path of light inside the substrate 3 of the diffractive optical structure becomes more stable, and light scattering and reflection caused by refractive-index variations are reduced. This not only improves light utilization but also makes the optical performance of the diffractive optical structure more stable and reliable.

In some examples of the present application, referring to FIG. 1, the substrate 3 includes two opposite surfaces, and the in-coupling region 1 and the out-coupling region 2 are disposed on at least one of the surfaces of the substrate 3; the in-coupling region 1 is configured to couple external light into the interior of the substrate 3, and the out-coupling region 2 is configured to expand the pupil and couple the light out.

In one specific example, referring to FIG. 1, the in-coupling region 1 and the out-coupling region 2 are together disposed on one of the two opposite surfaces of the substrate 3, and the in-coupling region 1 and the out-coupling region 2 are disposed adjacent to each other with a spacing therebetween; within the out-coupling region 2, the grating structure is configured such that, along a direction away from the in-coupling region 1, the average refractive index $\bar{n}$ of the different materials within one grating unit period of the grating structure, for example, exhibits a gradually decreasing trend.

With respect to the design of the above specific example, the detailed analysis is as follows:

(1) High-efficiency transmission in the initial stage:

For the grating structure disposed in the out-coupling region 2, the grating structure adjacent to the in-coupling region 1 can be set to have a relatively high average refractive index $\bar{n}$. This design takes into account the optical characteristics and requirements of light immediately after it enters the diffractive optical structure. A higher average refractive index $\bar{n}$ helps enhance the stability and transmission efficiency of light in the initial stage, ensuring that light can smoothly enter the interior of the substrate 3 from the in-coupling region 1 and propagate along the predetermined path.

(2) Matching out-coupling requirements at different positions within the out-coupling region 2:

As light continues to propagate toward the rear end inside the substrate 3, the reflection angle gradually decreases. To optimize out-coupling efficiency, the grating structure within the out-coupling region 2 can employ a design in which the average refractive index $\bar{n}$ is progressively reduced, thereby enabling more accurate and efficient light out-coupling at different positions and angles. Especially in locations farther from the in-coupling region 1, a lower average refractive index $\bar{n}$ ensures that light can still be efficiently coupled out even at smaller reflection angles.

(3) Optimizing light transmission and out-coupling efficiency:

Throughout the entire out-coupling region 2, the gradient variation design of the average refractive index $\bar{n}$ of the grating structure not only improves the transmission stability of light within the diffractive optical structure but also significantly optimizes the overall out-coupling efficiency. By precisely controlling the physical parameters and refractive-index distribution of the grating structure, the diffractive optical structure of the present application achieves accurate regulation of the light transmission path and out-coupling angle, allowing light to maintain high transmission efficiency and out-coupling efficiency over the entire length of the substrate 3.

In summary, within the out-coupling region 2, the average refractive index $\bar{n}$ of the grating structure adjacent to the in-coupling region 1 is set to a higher value to ensure that light can be transmitted efficiently and stably during the initial stage. As the distance from the in-coupling region 1 increases, the average refractive index $\bar{n}$ of the grating structure is gradually reduced to match the out-coupling requirements of light at different positions and to optimize overall light transmission and out-coupling efficiency.

In some examples of the present application, referring to FIGS. 2 and 6, the grating structure comprises a plurality of grating ridges 201 arranged along a first direction with a first period $P_1$, with grating grooves 202 located between any two adjacent grating ridges 201, at least part of the grating grooves 202 being air grooves 203;

the average refractive index $\bar{n}$ of the different materials within one grating unit period of the grating structure is as follows:

$$\bar{n} = \frac{\sum_{i=1}^{m} n_m * V_m}{V_{unitcell}};$$

where $\sum_{i=1}^{m} n_m * V_m = n_{1*}V_1 + n_2 * V_2 + n_3 * V_3 + \cdots\cdots + n_m * V_m$, $V_1$ is the longitudinal cross-sectional area of the grating ridge 201, $n_1$ is the refractive index of the grating ridge 201, $V_2$ is the longitudinal cross-sectional area of the air groove 203, $n_2$ is the refractive index of air, $V_3$ is the longitudinal cross-sectional area of the first filling material inside the grating groove 202, $n_3$ is the refractive index of the first filling material inside the grating groove 202, $V_m$ is the longitudinal cross-sectional area of the m-th filling material inside the grating groove 202, $n_m$ is the refractive index of the m-th filling material inside the grating groove 202, and $V_{unitcell} = P_1 * H$, H being the height of the grating ridge 201.

The grating structure provided by this example of the present application is a one-dimensional grating possessing only the first period $P_1$ in one direction.

In this example of the present application, the grating structure is designed to regulate the average refractive index $\bar{n}$ of the different materials within one grating unit period of the grating structure by filling with at least one filling material and by introducing the air groove 203.

As light propagates within the optical waveguide, its reflection angle changes gradually. The grating structure design of the present application allows, according to the specific position and angle of light propagation, the adjustment of the average refractive index $\bar{n}$ of the different materials within one grating unit period of the grating structure (hereinafter sometimes simply referred to as the average refractive index $\bar{n}$) so that the peak of the grating diffraction-efficiency curve moves to the optimum position, thereby achieving efficient light out-coupling.

By precisely controlling the distribution of the average refractive index $\bar{n}$ of the grating structure, the transmission path of light within the optical waveguide becomes more stable, light utilization and uniformity distribution are improved, and light loss is also reduced.

Overall, the grating structure design provided by the present application not only improves light out-coupling efficiency but also enhances the optical stability of the diffractive optical structure. It offers a clearer and more uniform visual experience for near-eye display devices such as augmented-reality devices and meets complex and variable light transmission and out-coupling requirements.

In a specific example, referring to FIG. 2, when both the longitudinal cross-sections of the grating ridge 201 and the grating groove 202 are rectangular and the grating groove 202 is the air groove 203, the average refractive index $\bar{n}$ of the different materials within one grating unit period of the grating structure is: $\bar{n} = (K_1 * n_1 + K_2 * n_2)/P_1$, where $K_1$ is the width of the grating ridge 201, $n_1$ is the refractive index of the grating ridge 201, $K_2$ is the width of the grating groove 202 (i.e., the air groove 203), and $n_2$ is the refractive index of air.

Designing the longitudinal cross-sections of the grating ridge 201 and the grating groove 202 as rectangles and using air as the sole filling material of the grating groove 202 simplifies both the manufacturing process of the grating structure and the calculation of the average refractive index $\bar{n}$.

Although the design is simplified, the average refractive index $\bar{n}$ of the different materials within one grating unit period of the grating structure can still be effectively controlled by adjusting the width ratio of the grating ridge 201 and the air groove 203 (i.e., the values of $K_1$ and $K_2$). This regulating capability allows the grating structure to better match various light-transmission and out-coupling requirements, thereby improving overall optical efficiency.

It should be noted that, owing to the introduction of the air groove 203, the average refractive index $\bar{n}$ of the different materials within one grating unit period of the grating structure is reduced, thereby permitting the peak of the diffraction-efficiency curve to be shifted to a more suitable angular position. This facilitates higher-efficiency light out-coupling during light transmission, with particularly pronounced benefits for the transmission and out-coupling of small-angle light.

In another specific example, referring to FIG. 6, when the longitudinal cross-sections of the grating ridge 201 and the grating groove 202 are both rectangular, the grating groove 202 includes at least one filling material (the first filling material 204 illustrated in FIG. 6) and the air groove 203, and the longitudinal cross-sections of both the filling material and the air groove 203 are also rectangular, the average refractive index $\bar{n}$ of the different materials within one grating unit period of the grating structure is expressed as: $\bar{n} = (K_1 * n_1 + K_2 * n_2 + K_3 * n_3 + \cdots\cdots + K_m * n_m)/P_1$, where $K_1$ is the width of the grating ridge 201, $n_1$ is the refractive index of the grating ridge 201, $K_2$ is the width of the air groove 203 within the grating groove 202 excluding the filling material, $n_2$ is the refractive index of air, $K_3 \sim K_m$ are the widths of the respective different filling materials within the grating groove 202, and $n_3 \sim n_m$ are the refractive indices of the respective different filling materials within the grating groove 202.

Referring again to FIG. 6, this design allows flexible combination of one or more filling materials and the air groove 203 within the grating groove 202. By adjusting the width ratios of the various materials, control over the average refractive index $\bar{n}$ of the different materials within one grating unit period of the grating structure can be achieved. This offers convenience for optimizing light out-coupling under different application scenarios. Moreover, such precise regulation enables the peak of the grating diffraction-efficiency curve to be shifted to an optimal position, thereby attaining more efficient and more uniform light out-coupling.

Optionally, the refractive index of the filling material within the grating groove 202 may be identical to that of the grating ridge 201. This design is equivalent to widening the width of the grating ridge 201 without altering the overall layout of the grating structure, thereby providing a new approach for adjusting the average refractive index $\bar{n}$ of the different materials within one grating unit period of the grating structure.

Certainly, the refractive index of the filling material within the grating groove 202 may also differ from that of the grating ridge 201. In this case, a low-refractive-index material can be used to fill part of the grating groove 202 while retaining the air groove 203, which is conducive to lowering the average refractive index $\bar{n}$ of the different materials within one grating unit period of the grating structure.

In order to more flexibly regulate the average refractive index $\bar{n}$ of the different materials within one grating unit period of the grating structure, the refractive indices of the grating ridge 201 and the grating groove 202 may be selected to be different. In this case, by filling the grating groove 202 with a low-refractive-index material, the average refractive index $\bar{n}$ of the different materials within one grating unit period of the grating structure can be significantly reduced. This differential refractive-index design not only widens the regulation range of the average refractive index $\bar{n}$ but also enables more precise regulation of the out-coupling efficiency of light at different positions and angles.

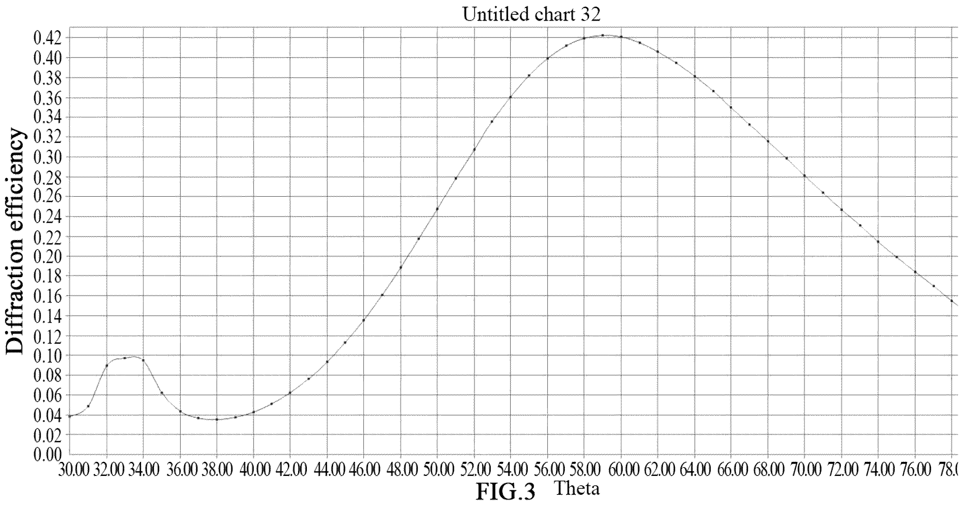

In response to the characteristic that the front end of the out-coupling region has a high out-coupling demand for light with large total-reflection angles, the present application proposes a method of shifting the peak position of the efficiency curve by regulating the average refractive index $\bar{n}$ of the grating structure. The grating structure of the present application is analyzed below with reference to FIGS. 3 to 5 and FIG. 7.

1. Initial stage:

At the front end of the out-coupling region 2, since only light with large total-reflection angles needs to be coupled out, the peak position of the out-coupling-efficiency curve must be set at a large-angle position. Referring to FIG. 3, the peak of the out-coupling-efficiency curve can be shifted to a large-angle position by increasing the average refractive index $\bar{n}$ of the grating structure, so as to satisfy the out-coupling demand at the front end.

In a specific example, the refractive index $n_1$ of the grating ridge 201 of the grating structure is 2.4, the refractive index $n_2$ of the grating groove 202 is 1.4, and the duty cycle is 0.75; according to the calculation formula for the average refractive index $\bar{n}$, the average refractive index $\bar{n}$ is 2.15. Referring further to FIG. 3, at this time the peak position of the out-coupling-efficiency curve is located at approximately 59°.

2. Intermediate stage:

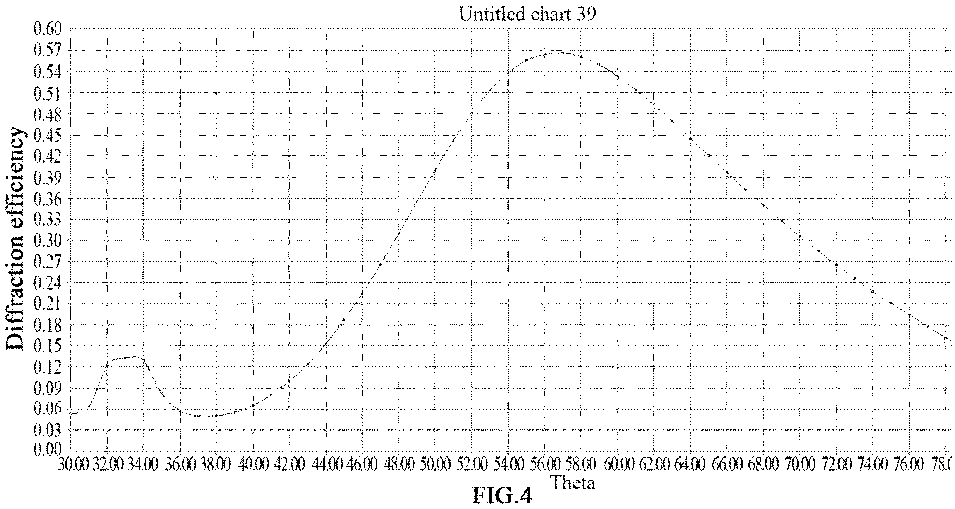

As light continues to propagate toward the rear end away from the in-coupling region 1, the reflection angle during propagation gradually decreases, and the out-coupling demand changes accordingly. To match this change, the average refractive index $\bar{n}$ of the grating structure within the out-coupling region 2 must be gradually reduced to shift the peak of the out-coupling-efficiency curve toward smaller angles. At this point, the average refractive index $\bar{n}$ of the grating structure can be decreased; referring to FIG. 4, by adjusting the duty cycle to alter the area ratio of the two materials in the grating structure, the size of the grating ridge 201 can be reduced or the refractive indices of the grating ridge 201 or the grating groove 202 can be lowered. When the duty cycle is adjusted to 0.5, the average refractive index $\bar{n}$ becomes 1.9.

Referring further to FIG. 4, the peak position of the out-coupling-efficiency curve is located at approximately 57°.

3. Final stage:

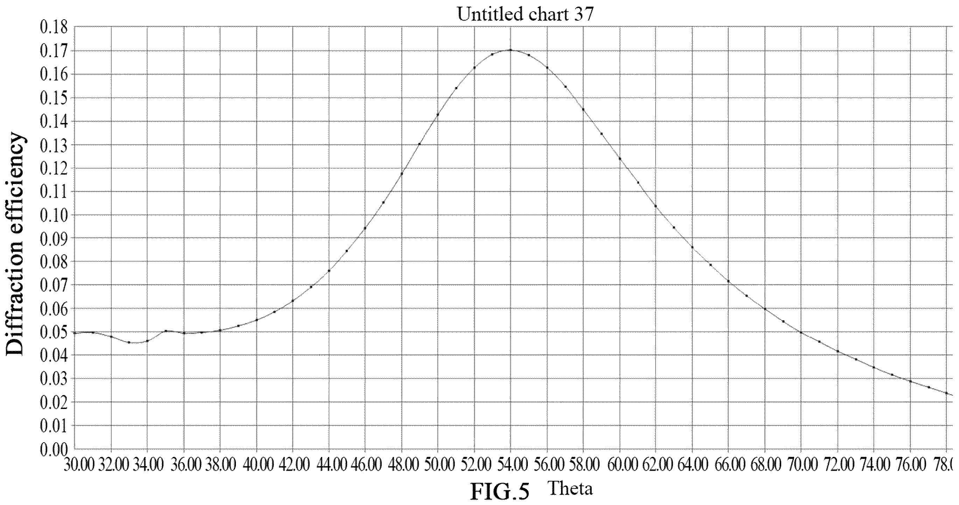

When light reaches the very rear end of the diffractive optical structure, its reflection angle has decreased to the minimum. At this moment, the peak of the out-coupling-efficiency curve must move to the smallest-angle position so as to maximize the out-coupling efficiency of small-angle light. Here, the duty cycle is adjusted to 0.25, further reducing the average refractive index $\bar{n}$ of the grating structure to 1.65. Referring to FIG. 5, the peak position of the out-coupling-efficiency curve is located at approximately 54°.

It should be noted that, in order to further reduce the average refractive index $\bar{n}$ of the different materials within one grating unit period of the grating structure in the out-coupling region 2, the present application also proposes a method of introducing an air groove.

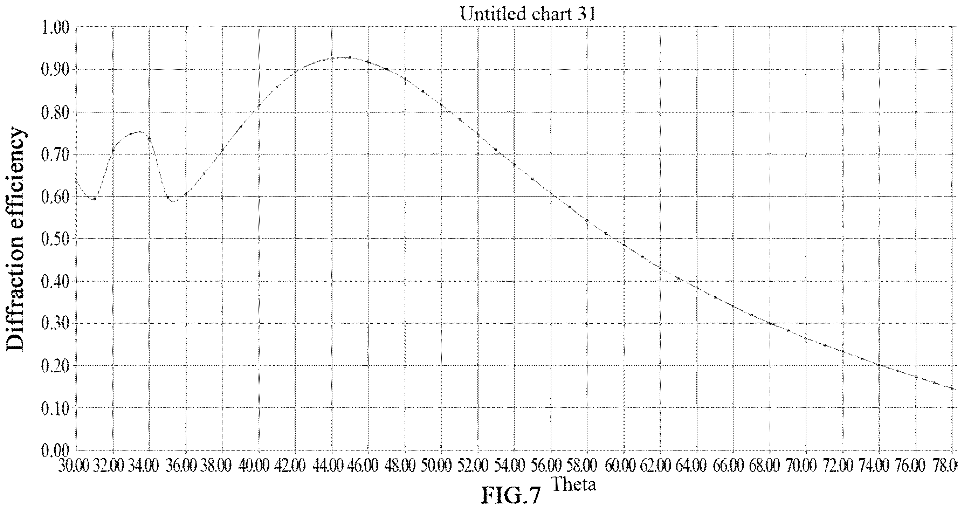

Because the refractive index of air (the refractive index of air is 1) is far lower than that of other media, introducing air as a filling material can markedly lower the average refractive index $\bar{n}$ of the different materials within one grating unit period of the grating structure; this refractive index $\bar{n}$ can be further reduced to 1.35, thereby causing the peak of the out-coupling-efficiency curve to shift even further toward smaller angles and ensuring high-efficiency out-coupling of light at the very rear end. Referring to FIG. 7, the peak position of the out-coupling-efficiency curve is located between 44° and 45°.

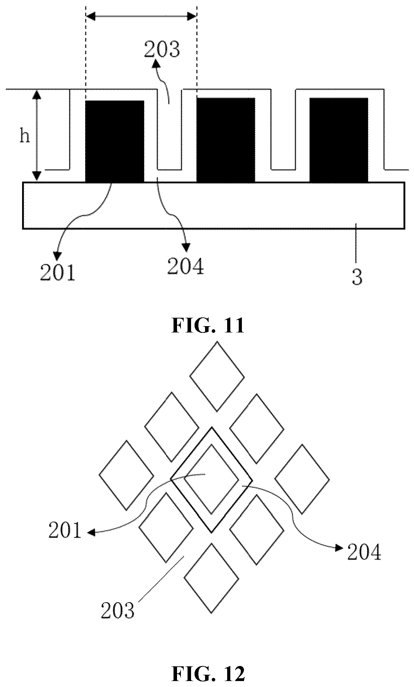

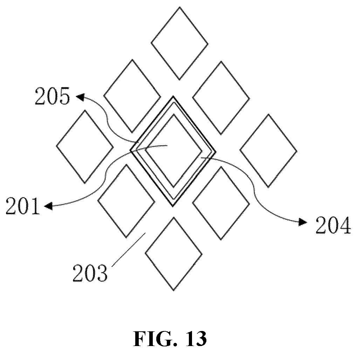

In some examples of the present application, referring to FIGS. 12 and 13, the grating structure comprises a plurality of grating ridges 201 arranged along a second direction with a second period $P_2$ and along a third direction with a third period $P_3$, adjacent grating ridges 201 defining grating grooves 202, at least part of the grating grooves 202 being air grooves 203;

the average refractive index $\bar{n}$ of the different materials within one grating unit period of the grating structure is expressed as

$$\bar{n} = \frac{\sum_{i=1}^{m} n_m * V_m}{V_{unitcell}};$$

where $\sum_{i=1}^{m} n_m * V_m = n_{1*}V_1 + n_2 * V_2 + n_3 * V_3 + \cdots\cdots + n_m * V_m$ , $V_1$ is the volume of the grating ridge 201, $n_1$ is the refractive index of the grating ridge 201, $V_2$ is the volume of the air groove 203, $n_2$ is the refractive index of air, $V_3$ is the volume of the first filling material inside the grating groove 202, $n_3$ is the refractive index of the first filling material inside the grating groove 202, $V_m$ is the volume of the m-th filling material inside the grating groove 202, $n_m$ is the refractive index of the m-th filling material inside the grating groove 202, and $V_{unitcell}= (P_2*P_3)*H$, where H is the height of the grating ridge 201.

The present example relates to a two-dimensional grating structure. By precisely controlling the material composition and volume within the grating ridges 201 and the grating grooves 202, the average refractive index $\overline{n}$ of the different materials within one grating unit period of the grating structure can be rationally designed.

The grating grooves 202 are located between adjacent grating ridges 201, and at least part of the grating grooves 202 is the air groove 203. One or more different materials may also be filled into the grating grooves 202.

By precisely adjusting the material composition and volume within the grating ridges 201 and the grating grooves 202, the average refractive index $\overline{n}$ of the different materials within one grating unit period of the grating structure can be regulated, thereby achieving controlled shifting of the diffraction-efficiency curve. This helps to increase the out-coupling efficiency of light at specific angles and, especially in augmented-reality (AR) optical solutions, is vital for improving the overall optical efficiency of the diffractive optical structure.

In this example, the two-dimensional grating structure achieves fine control of the average refractive index of the grating structure through precise control of material composition and volume distribution, thereby enhancing diffraction efficiency and the overall optical performance of the diffractive optical structure.

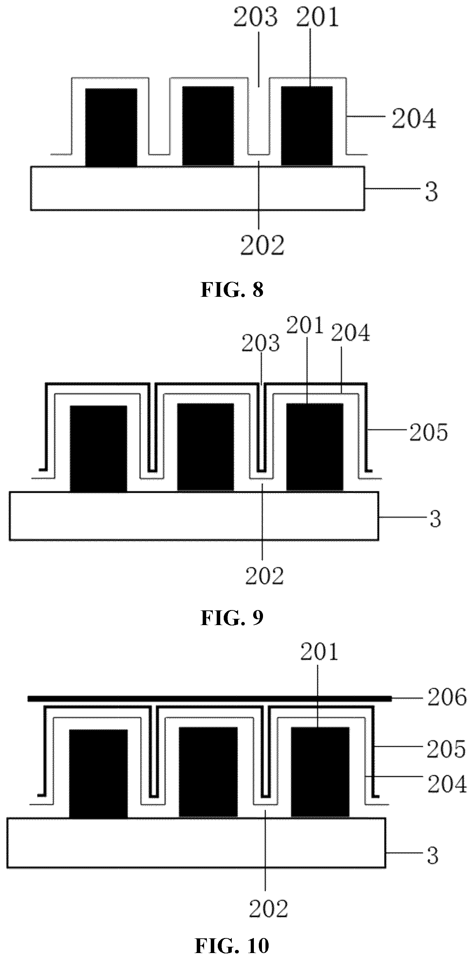

In some examples of the present application, referring to FIGS. 8 to 10, the grating structure further comprises at least one layer of filling material whose refractive index is different from that of the grating ridge 201.

Referring to FIGS. 8 to 10, the grating structure may also include at least one layer of filling material whose refractive index differs from that of the grating ridge 201 (the filling material may form a filling-material layer covering the grating structure). This design introduces an additional degree of freedom for refractive-index adjustment.

The introduction of the filling material can employ various manufacturing processes, such as ALD deposition, PVD deposition, CVD deposition, etc. These processes enable precise control of the thickness of the formed filling material, thereby ensuring that the optical performance of the grating structure meets expectations.

In some examples of the present application, referring to FIG. 8, the at least one layer of filling material comprises a first filling material 204, the first filling material 204 covering the surfaces of the grating ridge 201 and the sidewalls and the bottom of the grating groove 202, wherein the grating groove 202 comprises the air groove 203 and the first filling material 204.

In this example of the present application, the grating structure additionally comprises the first filling material 204, the first filling material 204 covering the surfaces of the grating ridge 201 and the sidewalls and the bottom of the grating groove 202, and a portion of space within the grating groove 202 is still retained as the air groove 203. The first filling material 204 may be a low-refractive-index material, and the introduction of the first filling material 204 provides additional means for regulating the average refractive index $\overline{n}$ of the different materials within one grating unit period of the grating structure. By selecting an appropriate refractive index for the first filling material, the average refractive index $\overline{n}$ of the different materials within one grating unit period of the grating structure can be precisely adjusted, thereby influencing the out-coupling-efficiency curve of the grating structure. Retaining the air groove 203 allows the refractive index of the grating-groove 202 portion to be further lowered while ensuring structural stability.

In some examples of the present application, referring to FIG. 9, the at least one layer of filling material comprises a second filling material 205, the second filling material 205 being disposed on the first filling material 204, and the grating groove 202 comprises the second filling material 205 while the air groove 203 is still retained, wherein the refractive index of the first filling material 204 differs from the refractive index of the second filling material 205.

Referring to FIG. 9, this example further adds the second filling material 205 on the basis of the first filling material 204, and a portion of space within the grating groove 202 is still retained as the air groove 203. The refractive index of the first filling material 204 differs from that of the second filling material 205. By adding a further layer of the second filling material 205 whose refractive index differs from that of the first filling material 204, the regulation range of the average refractive index $\overline{n}$ of the different materials within one grating unit period of the grating structure can be further broadened. This helps to precisely control the out-coupling efficiency over a wider angular range. The multi-layer filling-material design enables the peak position and shape of the efficiency curve to be more finely regulated to meet specific requirements in different application scenarios.

In some examples of the present application, referring to FIG. 10, the at least one layer of filling material further comprises a third filling material 206, the third filling material 206 being disposed on the surface of the second filling material 205 that faces away from the first filling material 204, the grating groove 202 further comprising the third filling material 206, and the third filling material 206 filling the air groove 203; the refractive indices of the first filling material 204,

the second filling material 205 and the third filling material 206 are all different from one another.

In this example, referring to FIG. 10, the grating structure further comprises the first filling material 204, the second filling material 205 and the third filling material 206, the three layers of materials having mutually different refractive indices. The combination of three filling materials with different refractive indices enables the average refractive index $\bar{n}$ of the different materials within one grating unit period of the grating structure to be regulated with even higher accuracy, thereby providing strong support for precisely controlling the diffraction-efficiency curve of the grating.

Moreover, filling materials with different refractive indices may exhibit different optical characteristics, such as different transmittance or scattering properties. The combination of these characteristics allows the grating structure to display diversified optical performance under different conditions.

In summary, referring to FIGS. 8 to 10, the three examples achieve precise regulation of the average refractive index $\bar{n}$ of the different materials within one grating unit period of the grating structure in the out-coupling region 2 and significant improvement of optical performance by introducing different numbers of filling materials with different refractive indices and by retaining the air groove 203. These designs not only help increase the overall optical efficiency of the diffractive optical structure but also provide more reliable and flexible technical support for applications in augmented reality and other fields.

According to another embodiment of the present application, a near-eye display device is provided. The near-eye display device comprises an image source and the diffractive optical structure described above, light emitted from the image source being incident on the in-coupling region 1 of the diffractive optical structure.

The image source is, for example, a projection light engine.

The diffractive optical structure is, for example, a diffractive optical waveguide.

The near-eye display device provided by the embodiments of the present application is, for example, an AR optical display device. Further, the AR optical display device is, for example, AR smart glasses or an AR smart helmet.

Specific implementations of the near-eye display device of the embodiments of the present application may refer to the various embodiments of the diffractive optical structure described above and therefore possess all the advantageous effects brought by the technical solutions of the above embodiments, which will not be repeated herein.

The above embodiments focus on the differences among the various embodiments; any different optimization features among the embodiments may, as long as they do not contradict each other, be combined to form a better embodiment. For the sake of brevity, these will not be repeated herein.

Embodiments

Embodiment 1. A diffractive optical structure, including a substrate and an in-coupling region and an out-coupling region provided on the substrate;

wherein the out-coupling region includes a grating structure that includes a plurality of periodically arranged grating ridges and grating grooves between adjacent grating ridges, and the grating grooves contain at least two materials having different refractive indices;
an average refractive index $\bar{n}$ of the different materials within one grating unit period of the grating structure satisfies

$$1.1 < \bar{n} \leq 2.4, \text{ where } \bar{n} = \frac{\sum_{i=1}^{m} n_m * V_m}{V_{unitcell}}, V_1, \ldots, V_m$$ are respectively the volumes or areas of the first to the m-th material, $n_1, ..., n_m$ are the refractive indices of the first to the m-th material, and $V_{unitcell}$ is the volume or area of one grating unit period.

Embodiment 2. The diffractive optical structure according to embodiment 1, wherein the average refractive index $\bar{n}$ of the different materials within one grating unit period of the grating structure satisfies $1.35 \leq \bar{n} \leq 2.15$.

Embodiment 3. The diffractive optical structure according to embodiment 1 or 2, wherein the substrate has two opposite surfaces, and the in-coupling region and the out-coupling region are disposed on at least one of the surfaces of the substrate;

the in-coupling region is configured to couple external light into the interior of the substrate; and
the out-coupling region is configured to expand the pupil and couple the light out.

Embodiment 4. The diffractive optical structure according to any one of embodiments 1 to 3, wherein the grating structure includes a plurality of grating ridges arranged along a first direction with a first period $P_1$, grating grooves being located between adjacent grating ridges, and at least part of the grating grooves is an air groove;
the average refractive index $\bar{n}$ of the different materials within one grating unit period of the grating structure is calculated as

$$\bar{n} = \frac{\sum_{i=1}^{m} n_m * V_m}{V_{unitcell}}; \text{where } \sum_{i=1}^{m} n_m * V_m = n_{1*}V_1 + n_2 * V_2 + n_3 * V_3 + \cdots\cdots + n_m * V_m, V_1 \text{ is}$$

the longitudinal cross-sectional area of the grating ridge, $n_1$ is the refractive index of the grating ridge, $V_2$ is the longitudinal cross-sectional area of the air groove, $n_2$ is the refractive index of air, $V_3$ is the longitudinal cross-sectional area of a first filling material inside the grating groove, $n_3$ is the refractive index of the first filling material inside the grating groove, $V_m$ is the longitudinal cross-sectional area of an m-th filling material inside the grating groove, $n_m$ is the refractive index of the m-th filling material inside the grating groove, and $V_{unitcell}=P_1*H$, H being the height of the grating ridge.

Embodiment 5. The diffractive optical structure according to any one of embodiments 1 to 4, wherein the grating structure includes a plurality of grating ridges arranged with a second period $P_2$ along a second direction and with a third period $P_3$ along a third direction, grating grooves being located between adjacent grating ridges, and at least part of the grating grooves is an air groove;

the average refractive index $\bar{n}$ of the different materials within one grating unit period of the grating structure is

calculated as $\bar{n} = \frac{\sum_{i=1}^{m} n_m * V_m}{V_{unitcell}}$;

where $\sum_{i=1}^{m} n_m * V_m = n_{1*}V_1 + n_2 * V_2 + n_3 * V_3 + \cdots\cdots + n_m * V_m$, $V_1$ is the volume of the grating ridge, $n_1$ is the refractive index of the grating ridge, $V_2$ is the volume of the air groove, $n_2$ is the refractive index of air, $V_3$ is the volume of a first filling material inside the grating groove, $n_3$ is the refractive index of the first filling material inside the grating groove, $V_m$ is the volume of an m-th filling material inside the grating groove, $n_m$ is the refractive index of the m-th filling material inside the grating groove, and $V_{unitcell}= (P_2*P_3)*H$, H being the height of the grating ridge.

Embodiment 6. The diffractive optical structure according to any one of embodiments 1 to 5, wherein at least one layer of filling material is disposed to cover the grating structure, and the refractive index of the at least one layer of filling material is different from the refractive index of the grating ridge.

Embodiment 7. The diffractive optical structure according to any one of embodiments 1 to 6, wherein the at least one layer of filling material includes a first filling material covering surfaces of the grating ridge and sidewalls and a bottom of the grating groove, the grating groove including the air groove and the first filling material.

Embodiment 8. The diffractive optical structure according to any one of embodiments 1 to 7, wherein the at least one layer of filling material further includes a second filling material covering the first filling material, the grating groove further including the second filling material while retaining the air groove, and the refractive index of the first filling material is different from the refractive index of the second filling material.

Embodiment 9. The diffractive optical structure according to any one of embodiments 1 to 8, wherein the at least one layer of filling material further includes a third filling material covering a surface of the second filling material facing away from the first filling material, the grating groove further including the third filling material and the third filling material filling the air groove;

the refractive indices of the first filling material, the second filling material, and the third filling material are all different from one another.

Embodiment 10. A near-eye display device, including:

an image source; and
the diffractive optical structure according to any one of embodiments 1 to 9, light emitted from the image source being incident on the in-coupling region of the diffractive optical structure.

Although the present disclosure has been described in detail in connection with some specific embodiments by way of illustration, those skilled in the art should understand that the above examples are provided for illustration only and should not be taken as any limitation on the scope of the disclosure. Those skilled in the art will appreciate that modifications may be made to the above embodiments without departing from the scope and spirit of the present disclosure. We therefore claim as our disclosure all that comes within the scope of the appended claims.

**Claims**

1.  A diffractive optical structure, comprising a substrate (3) and an in-coupling region (1) and an out-coupling region (2) provided on the substrate (3);

wherein the out-coupling region (2) includes a grating structure that comprises a plurality of periodically arranged grating ridges (201) and grating grooves (202) between adjacent grating ridges (201), and the grating grooves (202) contain at least two materials having different refractive indices;

an average refractive index $\bar{n}$ of the different materials within one grating unit period of the grating structure satisfies $1.1 < \bar{n} \leq 2.4$, where $\bar{n} = \frac{\sum_{i=1}^{m} n_m * V_m}{V_{unitcell}}$, $V_1, \ldots, V_m$ are respectively the volumes or areas of the first to the m-th material, $n_1, ..., n_m$ are the refractive indices of the first to the m-th material, and $V_{unitcell}$ is the volume or area of one grating unit period.

2. The diffractive optical structure according to claim 1, wherein the average refractive index $\bar{n}$ of the different materials within one grating unit period of the grating structure satisfies $1.35 \leq \bar{n} \leq 2.15$.

3. The diffractive optical structure according to claim 1 or 2, wherein the substrate (3) has two opposite surfaces, and the in-coupling region (1) and the out-coupling region (2) are disposed on at least one of the surfaces of the substrate (3);

   the in-coupling region (1) is configured to couple external light into the interior of the substrate (3); and
   the out-coupling region (2) is configured to expand the pupil and couple the light out.

4. The diffractive optical structure according to any one of claims 1 to 3, wherein the grating structure comprises a plurality of grating ridges (201) arranged along a first direction with a first period $P_1$, grating grooves (202) being located between adjacent grating ridges (201), and at least part of the grating grooves (202) is an air groove (203); the average refractive index $\bar{n}$ of the different materials within one grating unit period of the grating structure is calculated as $\bar{n} = \frac{\sum_{i=1}^{m} n_m * V_m}{V_{unitcell}}$ ; where

$\sum_{i=1}^{m} n_m * V_m = n_{1*}V_1 + n_2 * V_2 + n_3 * V_3 + \cdots\cdots + n_m * V_m$ , $V_1$ is the longitudinal cross-sectional area of the grating ridge (201), $n_1$ is the refractive index of the grating ridge (201), $V_2$ is the longitudinal cross-sectional area of the air groove (203), $n_2$ is the refractive index of air, $V_3$ is the longitudinal cross-sectional area of a first filling material inside the grating groove (202), $n_3$ is the refractive index of the first filling material inside the grating groove (202), $V_m$ is the longitudinal cross-sectional area of an m-th filling material inside the grating groove (202), $n_m$ is the refractive index of the m-th filling material inside the grating groove (202), and $V_{unitcell} = P_1 * H$, H being the height of the grating ridge (201).

5. The diffractive optical structure according to any one of claims 1 to 4, wherein the grating structure comprises a plurality of grating ridges (201) arranged with a second period $P_2$ along a second direction and with a third period $P_3$ along a third direction, grating grooves (202) being located between adjacent grating ridges (201), and at least part of the grating grooves (202) is an air groove (203); the average refractive index $\bar{n}$ of the different materials within one grating unit period of the grating structure is calculated as $\bar{n} = \frac{\sum_{i=1}^{m} n_m * V_m}{V_{unitcell}}$ ; where

$\sum_{i=1}^{m} n_m * V_m = n_{1*}V_1 + n_2 * V_2 + n_3 * V_3 + \cdots\cdots + n_m * V_m$ , $V_1$ is the volume of the grating ridge (201), $n_1$ is the refractive index of the grating ridge (201), $V_2$ is the volume of the air groove (203), $n_2$ is the refractive index of air, $V_3$ is the volume of a first filling material inside the grating groove (202), $n_3$ is the refractive index of the first filling material inside the grating groove (202), $V_m$ is the volume of an m-th filling material inside the grating groove (202), $n_m$ is the refractive index of the m-th filling material inside the grating groove (202), and $V_{unitcell} = (P_2 * P_3) * H$, H being the height of the grating ridge (201).

6. The diffractive optical structure according to any one of claims 1 to 5, wherein at least one layer of filling material is disposed to cover the grating structure, and the refractive index of the at least one layer of filling material is different from the refractive index of the grating ridge (201).

7. The diffractive optical structure according to any one of claims 1 to 6, wherein the at least one layer of filling material includes a first filling material (204) covering surfaces of the grating ridge (201) and sidewalls and a bottom of the grating groove (202), the grating groove (202) including the air groove (203) and the first filling material (204).

8. The diffractive optical structure according to any one of claims 1 to 7, wherein the at least one layer of filling material further includes a second filling material (205) covering the first filling material (204), the grating groove (202) further including the second filling material (205) while retaining the air groove (203), and the refractive index of the first filling material (204) is different from the refractive index of the second filling material (205).

9. The diffractive optical structure according to any of claims 1 to 8, wherein the at least one layer of filling material further includes a third filling material (206) covering a surface of the second filling material (205) facing away from the first filling material (204), the grating groove (202) further including the third filling material (206) and the third filling material (206) filling the air groove (203);

the refractive indices of the first filling material (204), the second filling material (205), and the third filling material (206) are all different from one another.

10. A near-eye display device, comprising:

an image source; and
the diffractive optical structure according to any one of claims 1 to 9, light emitted from the image source being incident on the in-coupling region (1) of the diffractive optical structure.

**FIG. 1**

**FIG. 2**

FIG.3    Theta

EP 4 729 994 A1

FIG.4

FIG.5 Theta

EP 4 729 994 A1

**FIG. 6**

Untitled chart 31

FIG.7 Theta

EP 4 729 994 A1

203  201

204

3

202

**FIG. 8**

201
203    204

205

3

202

**FIG. 9**

201

206

205

204

3

202

**FIG. 10**

**FIG. 11**

**FIG. 12**

**FIG. 13**

Europäisches
Patentamt

European
Patent Office

Office européen
des brevets

# EUROPEAN SEARCH REPORT

**Application Number**

EP 25 20 1343

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 217 438 A (SONG SHARE CO LTD) 22 March 2022 (2022-03-22) | 1-4,6,7, 10 | INV. G02B5/18 |
| Y | * abstract * * figure 1 * * paragraph [0064] - paragraph [0091] * | 5,8,9 | F21V8/00 G02B6/34 G02B27/00 G02B27/01 |
| Y | CN 117 608 021 A (YUGUANG TECH BEIJING CO LTD) 27 February 2024 (2024-02-27) | 5 | G02B27/42 |
| A | * abstract * * paragraph [0088] - paragraph [0097] * | 1-4,6-10 | |
| Y | CN 117 666 138 A (HUAWEI TECH CO LTD) 8 March 2024 (2024-03-08) | 8,9 | |
| A | * paragraph [0671] - paragraph [0698] * * abstract * * figures 61,62,65,66,68 * | 1-7,10 | |

**TECHNICAL FIELDS SEARCHED (IPC)**

G02B

The present search report has been drawn up for all claims

| Place of search | Date of completion of the search | Examiner |
|---|---|---|
| Munich | 3 February 2026 | Sittler, Gilles |

## ANNEX TO THE EUROPEAN SEARCH REPORT
## ON EUROPEAN PATENT APPLICATION NO.

EP 25 20 1343

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| CN 114217438 | A | 22-03-2022 | CN | 114217438 A | 22-03-2022 |
| | | | US | 2025020928 A1 | 16-01-2025 |
| | | | WO | 2023093144 A1 | 01-06-2023 |
| CN 117608021 | A | 27-02-2024 | CN | 117608021 A | 27-02-2024 |
| | | | WO | 2025092580 A1 | 08-05-2025 |
| CN 117666138 | A | 08-03-2024 | CN | 117666138 A | 08-03-2024 |
| | | | EP | 4575610 A1 | 25-06-2025 |
| | | | US | 2025208424 A1 | 26-06-2025 |
| | | | WO | 2024051788 A1 | 14-03-2024 |

EPO FORM P0459

For more details about this annex : see Official Journal of the European Patent Office, No. 12/82